# EUROPEAN PATENT APPLICATION

(11) **EP 2 472 248 A2**
(43) Date of publication of application: **04.07.2012**
(21) Application number: 11195834.4
(22) Date of filing: 27.12.2011
(51) Int. Cl.: G01N 15/06, G01N 21/53, G01N 21/64, G01N 21/21

(54) **Microparticle detection apparatus**

(30) Priority: 28.12.2010 KR 20100136431
(71) Applicant: Samsung Electronics Co., Ltd, Gyeonggi-do (KR); Korea Advanced Institute of Science and Technology, Daejeon (KR)
(72) Inventor: Kwon, Joonhyung, Incheon (KR); Yoon, Du Seop, Gyeonggi-do (KR); Roh, Hee Yuel, Gyeonggi-do (KR); Kim, Soo Hyun, Daejeon (KR); Ryu, Sung Yoon, Daejeon (KR); Kwon, Won Sik, Jeollabuk-do (KR); Lee, Hyub, Daejeon (KR)
(74) Representative: Grünecker, Kinkeldey, Stockmair & Schwanhäusser

(57) **Abstract**

A microparticle detection apparatus is provided. The microparticle detection apparatus includes a light emitting optical element, a converging optical system disposed in an advancing direction of light emitted from the optical element to converge the light, a particle path located in an advancing direction of the light having passed through the converging optical system so that the particle path intersects the light, a beam blocking unit to block direct light having passed through the particle path, a condensing lens disposed at the rear of the beam blocking unit, and a detector disposed at the rear of the condensing lens to detect light scattered by particles. A focal point of light formed by the optical element and the converging optical system may be located at the rear of the particle path. A focal point of light irradiated to the particles may be different from the introduction position of the particles.

## Description

### BACKGROUND

### 1. Field

The embodiments discussed herein relate to a microparticle detection apparatus to optically detect microparticles floating in air.

### 2. Description of the Related Art

In recent years, interest in a safe atmosphere has increased. Therefore, microparticle detection technology for use by the general public to easily monitor atmospheric state in real time is being developed.

An object to be detected, such as a microparticle, having a size of 0.1 to 1 µm may be detected using a method of detecting scattering of light induced by irradiating light to an aerosol-phase sample.

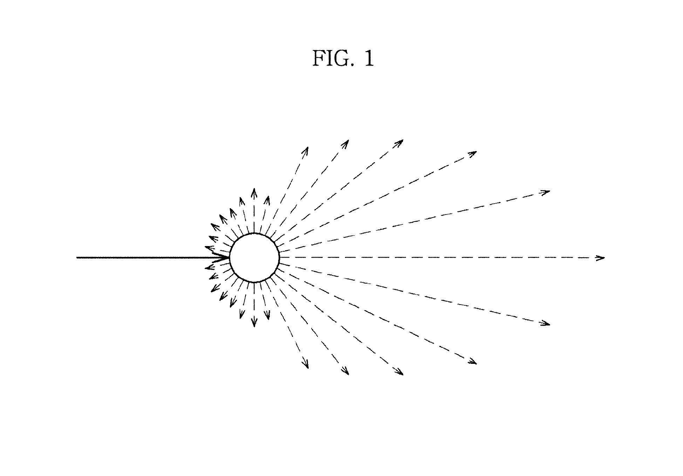

Scattering caused by the microparticle is within a Mie scattering range. The intensity of scattering light within the Mie scattering range may have a distribution as shown in FIG. 1.

As illustrated in FIG. 1, scattering light (dotted line) may have the highest distribution in a direction substantially the same as the direction in which light (solid line) is irradiated to a microparticle.

Therefore, scattering light may be effectively detected in a direction substantially the same as a advancing direction of the light irradiated to the microparticle. However, light directly emitted from a light source without being scattered by a microparticle(hereinafter, referred to as direct light) may also be detected, and therefore, the detection of scattering light may be inaccurate. That is, a signal to noise ratio (SNR) of scattering light detection may be low, thereby reducing detection reliability of a microparticle.

Scattering light may be detected in directions other than a direction substantially the same as an advancing direction of light irradiated to a microparticle. While the direct light may be reduced; however, the intensity of detected scattering light may also be reduced with the result that an SNR of scattering light detection may not be substantially improved.

### SUMMARY

It is an aspect of an exemplary embodiment of the present invention to provide a microparticle detection apparatus wherein a focal point of light irradiated to particles is adjusted to be located between an introduction unit and a beam blocking unit, thereby detecting scattering light from microparticles from which stray light is maximally excluded.

Additional aspects of exemplary embodiment of the present invention will be set forth in part in the description which follows and, in part, will be obvious from the description, or may be learned by practice of the invention.

In accordance with an aspect of an exemplary embodiment of the present invention, a microparticle detection apparatus includes a light emitting optical element, a converging optical system disposed in an advancing direction of light emitted from the optical element to converge the light, a particle path located in an advancing direction of the light having passed through the converging optical system so that the particle path intersects the light, a beam blocking unit to block direct light having passed through the particle path, a condensing lens disposed at the rear of the beam blocking unit, and a detector disposed at the rear of the condensing lens to detect light scattered by particles, wherein a focal point of light formed by the optical element and the converging optical system is located at the rear of the particle path.

The focal point of light may be located between the particle path and the beam blocking unit.

The condensing lens may be provided at the rear thereof with a shadow zone of the beam blocking unit, and the detector may be located in the shadow zone.

The diameter of the beam blocking unit may be adjusted so that the shadow zone has a predetermined size or more.

The particle path may be located ahead of a back focal plane of the condensing lens so that scattering light generated at the position of the particle path is converged into the shadow zone by the condensing lens.

The beam blocking unit may include a first blocking wall disposed perpendicularly to the advancing direction of light to block some of the direct light and a second blocking wall protruding from the first blocking wall.

The second blocking wall may protrude from the edge of the first blocking wall.

The second blocking wall may protrude from the first blocking wall in parallel to the advancing direction of light.

The beam blocking unit may be partially located in the condensing lens.

The beam blocking unit may include a mirror inclined at a predetermined angle to the advancing direction of light to reflect the direct light.

In accordance with another aspect of the present invention, a microparticle detection apparatus includes an optical chamber, an introduction unit through which particles are introduced into the optical chamber, a light source unit to irradiate light to the introduced particles, a detection optical system to detect light scattered by the particles to which the light has been irradiated, and a beam blocking unit disposed ahead of the detection optical system to block direct light, wherein a focal point of the light irradiated to the particles is located between a particle path defined by the particles introduced into the optical chamber and the beam blocking unit.

The particle path may be located in an advancing direction of light emitted from the light source unit so that the particle path intersects the light.

The detection optical system may include a condensing lens to refract the light having passed through the beam blocking unit to converge the light and a detector located on a focal point of scattering light converged by the condensing lens to detect the scattering light.

The condensing lens may be provided at the rear thereof with a shadow zone of the beam blocking unit, and the detector may be located in the shadow zone.

The diameter of the beam blocking unit may be adjusted so that the shadow zone has a predetermined size or more.

The particle path may be located ahead of a back focal plane of the condensing lens so that scattering light generated at the position of the particle path may be converged into the shadow zone by the condensing lens.

The beam blocking unit may include a first blocking wall disposed perpendicularly to the advancing direction of light to block some of the direct light and a second blocking wall protruding from the first blocking wall.

The second blocking wall may protrude from the edge of the first blocking wall.

The second blocking wall may protrude from the first blocking wall in parallel to the advancing direction of light.

The beam blocking unit may be partially located in the condensing lens.

The beam blocking unit may include a mirror inclined at a predetermined angle to the advancing direction of light to reflect the direct light.

The condensing lens may include a lens having a non-spherical surface formed at one side or opposite sides thereof.

The condensing lens may include a converging lens to converge light.

The light source unit may include a light emitting optical element and a converging optical system to converge light emitted from the optical element.

The optical element may include a laser diode (LD) or a light emitting diode (LED).

In accordance with another aspect of the present invention, a microparticle detection apparatus includes an optical chamber, an introduction unit through which particles are introduced into the optical chamber, a light source unit to irradiate light to the introduced particles, a detection optical system to detect light scattered by the particles to which the light has been irradiated, and a beam blocking unit disposed ahead of the detection optical system to block direct light which is not scattered by the particles, wherein the beam blocking unit includes a first blocking wall disposed perpendicularly to an advancing direction of light emitted from the light source unit to block the direct light and a second blocking wall protruding from the first blocking wall.

The second blocking wall may protrude from the edge of the first blocking wall.

The second blocking wall may protrude from the first blocking wall in parallel to the advancing direction of light.

The detection optical system may include a condensing lens to refract the light having passed through the beam blocking unit to converge the light and a detector located on a focal point of scattering light converged by the condensing lens to detect the scattering light.

The beam blocking unit may be partially located in the condensing lens.

The condensing lens may be provided at the rear thereof with a shadow zone of the beam blocking unit, and the detector may be located in the shadow zone.

The diameter of the beam blocking unit may be adjusted so that the shadow zone has a predetermined size or more.

A particle path defined by the particles introduced into the optical chamber may be located ahead of a back focal plane of the condensing lens so that scattering light generated at the position of the particle path may be converged into the shadow zone by the condensing lens.

In accordance with a further aspect of the present invention, a microparticle detection apparatus includes an optical chamber, an introduction unit through which particles are introduced into the optical chamber, a light source unit to irradiate light to the introduced particles, a detection optical system to detect light scattered by the particles to which the light has been irradiated, and a beam blocking unit disposed ahead of the detection optical system to block direct light which is not scattered by the particles, wherein the beam blocking unit includes a mirror inclined at a predetermined angle to an advancing direction of light emitted from the light source unit to reflect the direct light incident upon the beam blocking unit.

The detection optical system may include a condensing lens to refract the light having passed through the beam blocking unit to converge the light and a detector located on a focal point of scattering light converged by the condensing lens to detect the scattering light.

The condensing lens may be provided at the rear thereof with a shadow zone of the beam blocking unit, and the detector may be located in the shadow zone.

The diameter of the beam blocking unit may be adjusted so that the shadow zone has a predetermined size or more.

A particle path defined by the particles introduced into the optical chamber may be located ahead of a back focal plane of the condensing lens so that scattering light generated at the position of the particle path may be converged into the shadow zone by the condensing lens.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 illustrates exemplary intensity distribution of scattering light in a Mie scattering zone;
FIG. 2 illustrates a microparticle detection apparatus according to an embodiment of the present invention;
FIG. 3 illustrates a microparticle detection apparatus;
FIG. 4 illustrates an optical path in a microparticle detection apparatus according to an exemplary embodiment of the present invention;
FIG. 5 illustrates conditions under which scattering light may be converged into a shadow zone in a microparticle detection apparatus;
FIG. 6 illustrates an optical path in a microparticle detection apparatus according to an exemplary embodiment of the present invention;
FIG. 7 illustrates conditions under which scattering light may be converged into a shadow zone in the microparticle detection apparatus of FIG. 6;
FIG. 8 illustrates an optical path in a microparticle detection apparatus according to exemplary embodiment of the present invention; and
FIG. 9 illustrates conditions under which scattering light is converged into a shadow zone in the microparticle detection apparatus of FIG. 8.

### DETAILED DESCRIPTION

Reference will now be made in detail to exemplary embodiments of the present invention, examples of which are illustrated in the accompanying drawings, wherein like reference numerals refer to like elements throughout.

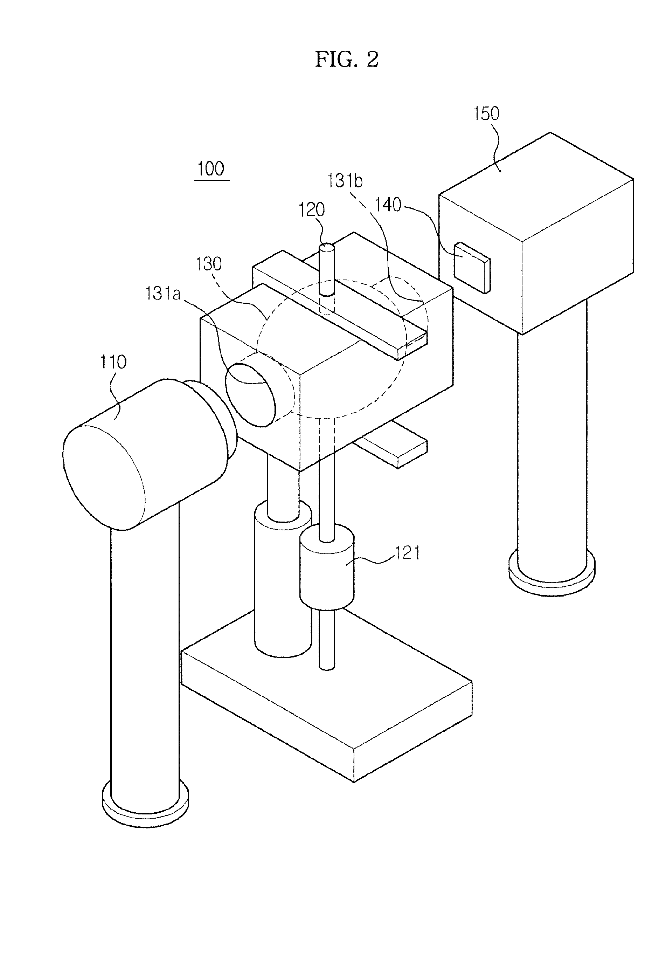

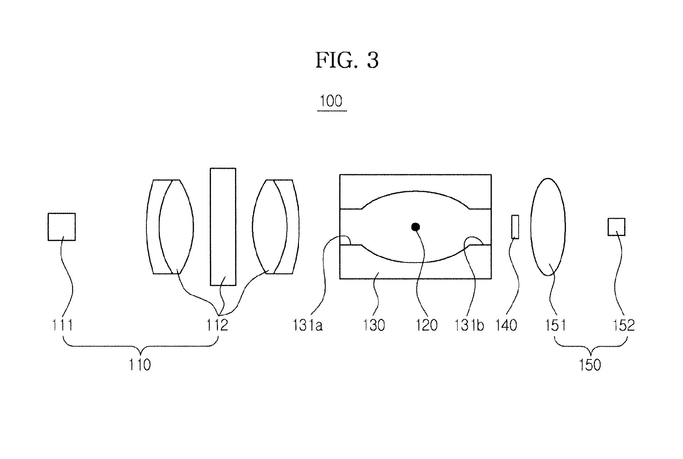

FIG. 2 illustrates a microparticle detection apparatus 100 according to an embodiment of the present invention, and FIG. 3 is a sectional view of a microparticle detection apparatus 100;

Referring to FIGS. 2 and 3, the microparticle detection apparatus 100 includes a light source unit 110, an introduction unit 120, an optical chamber 130, a beam blocking unit 140 and a detection optical system 150.

The light source unit 110, which irradiates light to sample particles, includes a light emitting optical element 111 and a converging optical system 112 to converge light emitted from the optical element 111.

The optical element 111 may include a laser diode (LD) (not shown) or a light emitting diode (LED) (not shown).

The converging optical system 112, including a plurality of lenses and a spectral filter, converges light emitted from the optical element 111 so that the light is irradiated into the optical chamber 130. That is, the converging optical system 112 may be positioned in the direction in which light advances to converge the light.

The converging optical system 112 may be designed to irradiate light exhibiting high optical density and low numerical aperture (NA). A plurality of collimating lenses, one side or opposite sides of which are non-spherical, may be used to minimize the size of a focal point of light.

When the optical element 111 is an LED, it may be necessary to design the converging optical system 112 with increased precision. This is because an LED light source exhibits the behavior of a surface light source, not a point light source, and high optical density may be needed to induce sufficient scattering light from microparticles.

The introduction unit 120 introduces environmental air or liquid particles (hereinafter, referred to as particles) in an aerosol phase into the optical chamber 130.

The introduction unit 120 includes a nozzle through which the particles flow into the optical chamber 130. The introduction unit 120 may be connected to a pump 121 to discharge the particles introduced into the optical chamber 130 to the outside.

That is, one end of the introduction unit 120, which is a particle inlet, is connected to the optical chamber 130 so that the introduced particles flow into the optical chamber 130. The other end of the introduction unit 120 may be connected to the pump 121 so that the particles are discharged from the optical chamber 130. Therefore, the introduction unit 120 may have an inlet port, through which particles are introduced into the optical chamber 130, and an outlet port, through which particles are discharged from the optical chamber 130.

The optical chamber 130 has a light inlet port 131a, through which light emitted from the light source unit 110 is irradiated into the optical chamber 130, and a light outlet port 131 b, through which the light irradiated into the optical chamber 130 is discharged out of the optical chamber. The light inlet port 131 a and the light outlet port 131 b are provided at predetermined positions of the optical chamber 130 so that light irradiated by the light source unit 110 is introduced through the light inlet port 131 a and is discharged through the light outlet port 131 b in a straight line.

The optical chamber 130 reflects light scattered by particles and discharges the light through the light outlet port 131 b. Light incident upon the optical chamber 130 is irradiated to particles introduced into the optical chamber 130 through the introduction unit 120 with the result that the particles induce scattering light. The scattering light is discharged through light outlet port 131 b, which is formed at a predetermined position of the optical chamber 130.

The beam blocking unit 140 may be disposed ahead of the detection optical system 150 to block direct light.

The intensity of scattering light emitted from microparticles performing Mie scattering is the highest at the front portion of the scattering light. For this reason, the detection optical system 150 to detect scattering light may be disposed in the advancing direction of the light discharged through the optical outlet port 131 b.

Light discharged through the optical outlet port 131 b includes direct light as well as front light scattered by the particles. Accordingly, the beam blocking unit 140 may be disposed ahead of the detection optical system 150 to block the direct light. As a result, the intensity of the detected scattering light becomes higher than the direct light, thereby improving detection efficiency of the scattering light, i.e., a signal to noise ratio (SNR) of the scattering light.

The beam blocking unit 140 may be made of a black anodized aluminum material to absorb incident direct light. Alternatively, the beam blocking unit 140 may be provided at the front thereof with a mirror to reflect direct light.

The detection condensing optical system 150 condenses light discharged from the optical chamber 130 and detects scattering light from the condensed light to determine whether microparticles are present.

The detection optical system 150, disposed at the rear of the optical outlet port 131 b, includes a condensing lens 151 and a detector 152.

The condensing lens 151 may include a converging convex lens. At least one side of the converging lens may be non-spherical to generate excellent converged light.

Although the condensing lens 151 includes a converging lens in this embodiment, lenses to converge light are included in the scope of the present invention. For example, the condensing lens 151 may include a lens having non-spherical surfaces formed at opposite sides thereof or a combination of a converging lens and a diverging lens.

The detector 152, detecting incident scattering light, includes a light receiving element, such as a photo diode (PD) (not shown) or a photo multiplier tube (PMT) (not shown).

The detector 152 may be an element to convert light into electricity. The detector 152 converts energy of photons absorbed by the element into a detectable form to measure photon flux or optical power.

The intensity of the received scattering light may be measured, and it may be determined how many microparticles are present in air based on the measured intensity of the scattering light.

Using the microparticle detection apparatus 100 according to an embodiment, microparticles floating in air may be rapidly detected in real time. The microparticle detection apparatus 100 according to an exemplary embodiment may be manufactured to have a relatively small size at low cost. Consequently, the microparticle detection apparatus according to this embodiment may be widely used in a variety of industries. For example, the microparticle detection apparatus according to an exemplary embodiment may be installed in home appliances so that the public may easily monitor indoor microparticles.

When the optical element is a laser diode, a focal point having a diameter of several µm or less may be formed, and the diameter of the beam blocking unit may be reduced since intensity of a laser light source has a Gaussian distribution. When the optical element is an LED, however, it may be difficult to form as small a focal point as the laser light source since an LED light source exhibits the behavior of a surface light source, and, in addition, the amount of light radiated to the periphery of the emitted light is large. Therefore, it may be increasingly important to optimize the size of the beam blocking unit.

For the LED light source, the beam blocking unit may be disposed to block the majority of light incident upon the beam blocking unit. However, a very small amount of light passes through the beam blocking unit due to the property of the LED light source. If the diameter of the beam blocking unit is increased to block such a very small amount of light, front scattering light is also blocked with the result that an SNR of scattering light may not be increased.

### Exemplary embodiments of are disclosed.

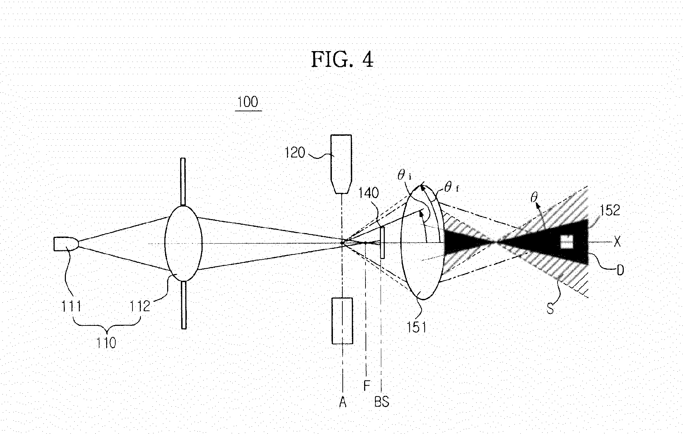

FIG. 4 illustrates an optical path in a microparticle detection apparatus according to an embodiment of the present invention.

Referring to FIG. 4, the microparticle detection apparatus 100 includes a light source unit 110, the introduction unit 120, the beam blocking unit 140 and the detection optical system 150 are sequentially disposed in the advancing direction of light emitted from a light source. That is, the introduction unit 120, the beam blocking unit 140 and the detection optical system 150 may be sequentially disposed at the rear of the light source unit 110.

Light emitted from the optical element 111 passes through the converging optical system 112, is irradiated to particles introduced through the introduction unit 120, and forms a focal point F on an optical axis X.

When the light is irradiated to the particles, scattering light generated from mircoparticles is emitted at a position A of a particle path. The particle path is defined by the particles introduced through the introduction unit. The particle path is formed so as to intersect light emitted from the light.

The scattering light emitted at the position A of the particle path passes through the beam blocking unit 140, is converged by the condensing lens 151, and forms a focal point on the optical axis X. The scattering light is received by the detector 152 located on the focal point. Some of the scattering light may be blocked by the beam blocking unit 140, the scattering light incident upon a scattering detection zone passes through the beam blocking unit 140 and is received by the detection optical system 150.

The scattering detection zone may be decided by the diameters of the beam blocking unit 140 and the condensing lens 151 and the distance between the introduction unit 120 and the beam blocking unit 140. As illustrated in FIG. 4, the scattering detection zone may be defined as a zone corresponding to an angle between θi and θf from the optical axis X. That is, the scattering light incident upon the zone corresponding to the angle between θi and θf, among the scattering light emitted at the position A of the particle path, passes through the beam blocking unit 140, is converged by the condensing lens 151, and forms a focal point at the position of the detector 152.

The beam blocking unit 140 blocks a major portion of direct light, which is not scattered by the microparticles, as well as some of the scattering light. Although the direct light is blocked by the beam blocking unit 140, some of the direct light passes through the beam blocking unit 140 with the result that stray light is formed in the zone of the detection optical system 150.

The light source unit 110 may be adjusted, so that the focal point F of the light emitted from the light source unit 110 is located between the position A of the particle path and the beam blocking unit 140, to improve detection efficiency of scattering light. As a result, the scattering light is detected in a shadow zone D of the beam blocking unit 140.

When the focal point F of the light emitted from the light source unit 110 is formed at the position A of the particle path, the scattering light and stray light passing through the beam blocking unit via the scattering detection zone are converted into the same zone by the condensing lens, which means that scattering light containing stray light is detected, with the result that an SNR of scattering light is lowered, and therefore, microparticles may not be effciently detected.

In an embodiment, therefore, the focal point F of the light source may be designed to be formed at the rear of the position A of the particle path so that scattering light and stray light passing through the beam blocking unit 140 are converged in a separated state.

If the focal point F of the light source is different from the position A of the particle path, at which the scattering light is emitted, angles at which the stray light and the scattering light passing through the beam blocking unit 140 are refracted by the condensing lens 151 become different from each other. Consequently, a stray light convergence zone S and a scattering light convergence zone D may be separated from each other in the zone of the detection optical system 150.

Referring to FIG. 4, as the result of separation between the focal point F of the light source and the emission position A of the scattering light, the scattering light is detected in the shadow zone D of the beam blocking in the detection optical system 150, and the stray light passing through the beam blocking unit 140 is detected in the peripheral zone S of the shadow zone D.

Scattering light may be detected in the shadow zone D of the beam blocking unit 140. Accordingly, the shadow zone D may be formed to have a proper size, and scattering light is converged into the shadow zone D.

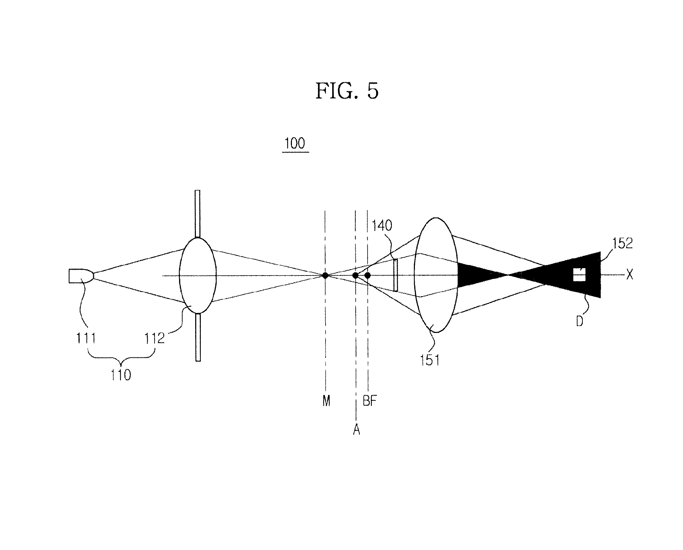

An exemplary microparticle detection apparatus is illustrated in FIG. 5.

FIG. 5 illustrates conditions under which scattering light is converged into the shadow zone in a microparticle detection apparatus, for example, as illustrated in FIG. 4.

The beam blocking unit 140 has a predetermined diameter or more to form the shadow zone D having a proper size.

A marginal line connecting one end of the beam blocking unit 140 and one end of a zone upon which light is incident is provided to set the diameter of the beam blocking unit 140.

As the diameter of the beam blocking unit 140 is decreased, an intersection point M between the marginal line and the optical axis X moves backward. In this embodiment, the intersection point M is set to be located ahead of the position A of the particle path to form the shadow zone D having the proper size.

The diameter of the beam blocking unit 140 may be adjusted so that the scattering detection zone, in which scattering light passes through the beam blocking unit 140, is properly maintained. This it occurs since, as the diameter of the beam blocking unit 140 is increased, the size of the scattering detection zone is decreased with the result that the amount of scattering light directed to the detection optical system 150 is reduced.

Upon forming the shadow zone D having the proper size through the above process, adjustment may be carried out so that the scattering light is converged into the shadow zone D.

An intersection point BF between a back focal plane of the condensing lens 151 and the optical axis X is defined. The back focal plane is a rear portion, in the advancing direction of light, of a plane on which light passing perpendicularly to the optical axis X is converged when a focal point is set to infinity.

When scattering light is emitted at the intersection point BF between the back focal plane and the optical axis X, the scattering light, having passed through the condensing lens 151, is collimated. When an emitting point of the scattering light is at the rear of the intersection point BF between the back focal plane and the optical axis X and is near the condensing lens 151, the scattering light, having passed through the condensing lens 151, is diverged.

The position A of the particle path may be designed to be located ahead of the intersection point BF between the back focal plane and the optical axis X so that scattering light is emitted ahead of the back focal plane, and therefore, the scattering light is converged into the shadow zone D.

The microparticle detection apparatus of FIG. 5 may be designed so that the position A of the particle path is located at the rear of the intersection point M between the marginal line and the optical axis X, and the intersection point BF between the back focal plane and the optical axis X is located at the rear of the position A of the particle path. As a result, scattering light is converged into the shadow zone having the proper size.

A microparticle detection apparatus to improve the SNR of scattering light, i.e. detection efficiency of light scattered by microparticles,has been disclosed.

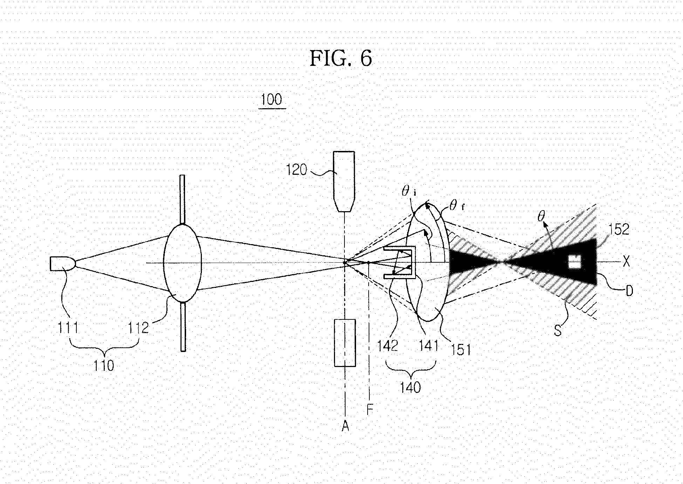

Embodiments of the microparticle detection apparatus in which the beam blocking unit may be modified in various ways are illustrated in FIGS. 6 to 9.

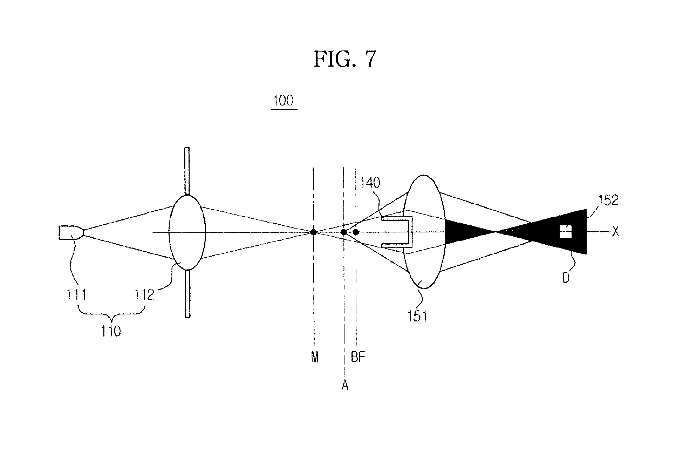

FIG. 6 illustrates an optical path in a microparticle detection apparatus 100 according to another embodiment of the present invention, and FIG. 7 illustrates conditions under which scattering light may be converged into a shadow zone in the microparticle detection apparatus of FIG. 6.

Referring to FIG. 6, the microparticle detection apparatus 100 includes a light source unit 110, an introduction unit 120, a beam blocking unit 140 and a detection optical system 150 including a condensing lens 151 and a detector 152, which are sequentially disposed.

Light emitted from the light source unit 110 is irradiated toward the introduction unit 120 causing mircoparticles to scatter light. The irradiated light forms a focal point F on an optical axis parallel to the advancing direction of the light and is absorbed by the bean blocking unit 140. That is, the beam blocking unit 140 blocks direct light, which is not scattered by microparticles, to prevent the direct light from advancing to the detection optical system 150.

The scattering light, scattered by the mircoparticles, is emitted at a position A of a particle path along which particles flow. Some of the scattering light is blocked by the beam blocking unit 140, and some of the scattering light is incident upon the detection optical system 150 via a scattering detection zone.

The scattering detection zone is a zone (an angle between θi and θf) where the scattering light passes through the beam blocking unit 140 from an emitting point of the scattering light (position A of the particle path). The scattering light emitted into the scattering detection zone is detected by the detector 152.

A major portion of the direct light is blocked by the beam blocking unit 140; however, some of the direct light is not blocked by the beam blocking unit 140 but forms stray light in the zone of the detection optical system 150. Also, some of the direct light blocked by the beam blocking unit 140 is reflected by the beam blocking unit 140 and is incident upon the detection optical system 150 to form stray light.

If the stray light as well as the scattering light is detected by the detector 152, an SNR of the scattering light is lowered with the result that efficiency of the microparticle detection apparatus 100 is lowered.

In this embodiment, for example, therefore, the focal point F of light emitted from the light source unit 110 is adjusted to be located between the position A of the particle path and the position of the beam blocking unit 140 to separate a stray light detection zone and a scattering light detection zone from each other in the zone of the detection optical system 150.

The beam blocking unit 140 may be formed in the shape of a cap to maximally prevent the generation of stray light.

The beam blocking unit 140 may include a first blocking wall 141 disposed perpendicularly to the optical axis X to block some of the direct light and a plurality of second blocking walls 142 protruding from the first blocking wall 141.

The first blocking wall 141 may be made of a black anodized aluminum material to absorb incident direct light. Alternatively, the first blocking wall 141 may include a mirror to reflect direct light.

The second blocking walls 142 protrude from the edge of the first blocking wall 141 to prevent some of the direct light blocked by the first blocking unit 141 from being reflected to stray light.

The second blocking walls 142 fully reflect direct light reflected by the first blocking wall 141 so that the direct light disappears in the beam blocking unit 140. A full reflection may occur in the beam blocking unit 140 several times. Therefore, each of the second blocking walls 142 may have a predetermined length so that direct light disappears in the beam blocking unit 140.

The beam blocking unit 140 may be partially located in the condensing lens 151 to secure a proper scattering detection zone since the scattering detection zone is narrowed as the length of each of the second blocking walls 142 increases.

The microparticle detection apparatus 100 according to this embodiment including the beam blocking unit 140 as described above maximally excludes stray light directed to the detection optical system 150, thereby improving detection efficiency of scattering light.

In the microparticle detection apparatus 100 with the above-stated construction according to this embodiment, as shown in FIG. 6, the shadow zone D of the beam blocking unit 140 is separated from the stray light detection zone S around the shadow zone D. Also, scattering light may be converged into the shadow zone D and is detected by the detector 152.

It may be necessary to adjust the diameter of the beam blocking unit 140 and to adjust the position A of the particle path and the position BF of the back focal plane of the condensing lens 151 so that the shadow zone D is formed to have a proper size or more and scattering light is converged into the shadow zone D.

Referring to FIG. 7, an intersection point M between a marginal line connecting one end of the beam blocking unit 140 and one end of a zone upon which light is incident and the optical axis X is set to be located ahead of the position A of the particle path. As the diameter of the beam blocking unit 140 is decreased, the intersection point M between the marginal line and the optical axis X is moved backward. The intersection point M may be set to be located ahead of the position A of the particle path so that the beam blocking unit 140 is a predetermined diameter or more, thereby forming the shadow zone D having the proper size or more.

The position A of the particle path, where scattering light is emitted, is adjusted to be located ahead of an intersection point BF between a back focal plane of the condensing lens 151 and the optical axis X so as to converge scattering light into the shadow zone D having the proper size or more.

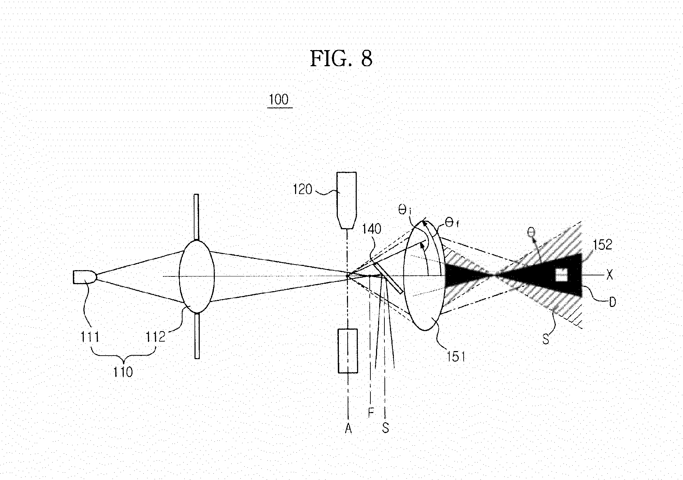

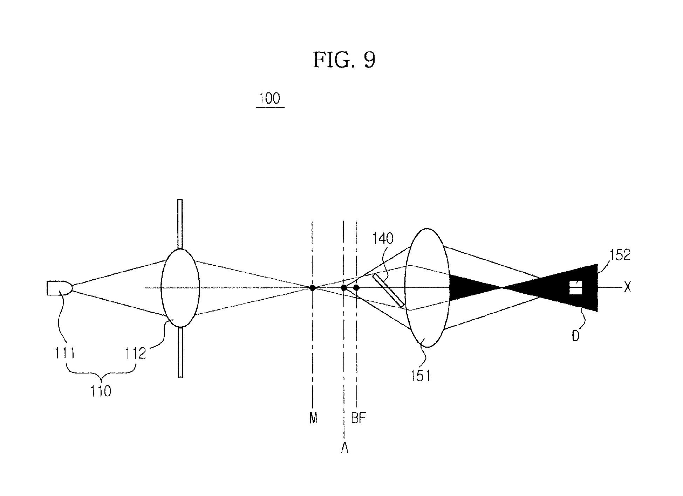

FIG. 8 illustrates an optical path in a microparticle detection apparatus 100 according to a further embodiment of the present invention, and FIG. 9 is a view showing conditions under which scattering light is converged into a shadow zone in the microparticle detection apparatus of FIG. 8.

Referring to FIGS. 8 and 9, the microparticle detection apparatus 100 includes a light source unit 110, an introduction unit 120, a beam blocking unit 140 and a detection optical system 150 including a condensing lens 151 and a detector 152, which are sequentially disposed in the advancing direction of light emitted from the light source unit 110.

The beam blocking unit 140 may include a mirror inclined at a predetermined angle to an optical axis X parallel to the advancing direction of light to reflect direct light incident upon the beam blocking unit.

The inclined beam blocking unit 140 maximally prevents direct light which is not scattered by microparticles from forming stray light in a zone of the detection optical system 150.

The position of a focal point F formed on the optical axis X of light irradiated to sample particles, a positional relationship between the position A of a particle path and the beam blocking unit 140, the diameter of the beam blocking unit 140, and a positional relationship between the position A of the particle path and a back focal plane of the condensing lens 151 are are substantially similar to those illustrated in FIGS. 6 and 7, and therefore, a detailed description thereof will not be given.

According to the microparticle detection apparatus of this embodiment as described above, the focal point of light irradiated to the sample particles is different from the introduction position of the sample particles, thereby detecting scattering light from microparticles from which stray light is maximally excluded. That is, an SNR of the scattering light is greatly improved, thereby improving detection reliability of microparticles.

The scattering light may be detected at the front part of the microparticle detection apparatus in the advancing direction of the light. Accordingly, fluorescent light or polarized light emitted from the sample particles may be detected at the side, thereby determining whether other components are contained in the light.

As is apparent from the above description, in the microparticle detection apparatus according to embodiments of the present invention, the stray light detection zone and the scattering light detection zone are separated from each other, thereby detecting scattering light from microparticles from which stray light is maximally excluded. That is, an SNR of the scattering light is greatly improved, thereby improving detection reliability of microparticles.

The scattering light is detected at the front part of the microparticle detection apparatus. Accordingly, fluorescent light or polarized light emitted from the sample particles may be detected at the side, thereby determining whether other components are contained in the light.

Although a few embodiments of the present invention have been shown and described, it would be appreciated by those skilled in the art that changes may be made in these embodiments without departing from the principles and spirit of the invention, the scope of which is defined in the claims and their equivalents.

The invention provides the following further embodiments 1 - 39:
1. A microparticle detection apparatus comprising:
   a light emitting optical element;
   a converging optical system disposed in an advancing direction of light emitted from the optical element to converge the light;
   a particle path located in an advancing direction of the light having passed through the converging optical system so that the particle path intersects the light;
   a beam blocking unit to block direct light having passed through the particle path;
   a condensing lens disposed at a rear of the beam blocking unit; and
   a detector disposed at a rear of the condensing lens to detect light scattered by particles, wherein
   a focal point of light formed by the optical element and the converging optical system is located at a rear of the particle path.
2. The microparticle detection apparatus according to embodiment 1, wherein the focal point of light is located between the particle path and the beam blocking unit.
3. The microparticle detection apparatus according to embodiment 1, wherein the condensing lens is provided at a rear thereof with a shadow zone of the beam blocking unit, and the detector is located in the shadow zone.
4. The microparticle detection apparatus according to embodiment 3, wherein a diameter of the beam blocking unit is adjusted so that the shadow zone has a predetermined size or more.
5. The microparticle detection apparatus according to embodiment 4, wherein the particle path is located ahead of a back focal plane of the condensing lens so that scattering light generated at a position of the particle path is converged into the shadow zone by the condensing lens.
6. The microparticle detection apparatus according to embodiment 2, wherein the beam blocking unit comprises:
   a first blocking wall disposed perpendicularly to the advancing direction of light to block some of the direct light; and
   a second blocking wall protruding from the first blocking wall.
7. The microparticle detection apparatus according to embodiment 6, wherein the second blocking wall protrudes from an edge of the first blocking wall.
8. The microparticle detection apparatus according to embodiment 6, wherein the second blocking wall protrudes from the first blocking wall in parallel to the advancing direction of light.
9. The microparticle detection apparatus according to embodiment 6, wherein the beam blocking unit is partially located in the condensing lens.
10. The microparticle detection apparatus according to embodiment 1, wherein the beam blocking unit comprises a mirror inclined at a predetermined angle to the advancing direction of light to reflect the direct light.
11. A microparticle detection apparatus comprising:
   an optical chamber;
   an introduction unit through which particles are introduced into the optical chamber;
   a light source unit to irradiate light to the introduced particles;
   a detection optical system to detect light scattered by the particles to which the light has been irradiated; and a beam blocking unit disposed ahead of the detection optical system to block direct light, wherein
   a focal point of the light irradiated to the particles is located between a particle path defined by the particles introduced into the optical chamber and the beam blocking unit.
12. The microparticle detection apparatus according to embodiment 11, wherein the particle path is located in an advancing direction of light emitted from the light source unit so that the particle path intersects the light.
13. The microparticle detection apparatus according to embodiment 11, wherein the detection optical system comprises:
   a condensing lens to refract the light having passed through the beam blocking unit to converge the light; and
   a detector located on a focal point of scattering light converged by the condensing lens to detect the scattering light.
14. The microparticle detection apparatus according to embodiment 13, wherein the condensing lens is provided at a rear thereof with a shadow zone of the beam blocking unit, and the detector is located in the shadow zone.
15. The microparticle detection apparatus according to embodiment 14, wherein a diameter of the beam blocking unit is adjusted so that the shadow zone has a predetermined size or more.
16. The microparticle detection apparatus according to embodiment 15, wherein the particle path is located ahead of a back focal plane of the condensing lens so that scattering light generated at a position of the particle path is converged into the shadow zone by the condensing lens.
17. The microparticle detection apparatus according to embodiment 11, wherein the beam blocking unit comprises:
   a first blocking wall disposed perpendicularly to the advancing direction of light to block some of the direct light; and
   a second blocking wall protruding from the first blocking wall.
18. The microparticle detection apparatus according to embodiment 17, wherein the second blocking wall protrudes from an edge of the first blocking wall.
19. The microparticle detection apparatus according to embodiment 17, wherein the second blocking wall protrudes from the first blocking wall in parallel to the advancing direction of light.
20. The microparticle detection apparatus according to embodiment 17, wherein the beam blocking unit is partially located in the condensing lens.
21. The microparticle detection apparatus according to embodiment 11, wherein the beam blocking unit comprises a mirror inclined at a predetermined angle to the advancing direction of light to reflect the direct light.
22. The microparticle detection apparatus according to embodiment 12, wherein the condensing lens comprises a lens having a non-spherical surface formed at one side or opposite sides thereof.
23. The microparticle detection apparatus according to embodiment 12, wherein the condensing lens comprises a converging lens to converge light.
24. The microparticle detection apparatus according to embodiment 11, wherein the light source unit comprises:
   a light emitting optical element; and
   a converging optical system to converge light emitted from the optical element.
25. The microparticle detection apparatus according to embodiment 24, wherein the optical element comprises a laser diode (LD) or a light emitting diode (LED).
26. A microparticle detection apparatus comprising:
   an optical chamber;
   an introduction unit through which particles are introduced into the optical chamber;
   a light source unit to irradiate light to the introduced particles; a detection optical system to detect light scattered by the particles to which the light has been irradiated; and
   a beam blocking unit disposed ahead of the detection optical system to block direct light which is not scattered by the particles, wherein the beam blocking unit comprises:
   a first blocking wall disposed perpendicularly to an advancing direction of light emitted from the light source unit to block the direct light; and
   a second blocking wall protruding from the first blocking wall.
27. The microparticle detection apparatus according to embodiment 26, wherein the second blocking wall protrudes from an edge of the first blocking wall.
28. The microparticle detection apparatus according to embodiment 26, wherein the second blocking wall protrudes from the first blocking wall in parallel to the advancing direction of light.
29. The microparticle detection apparatus according to embodiment 26, wherein the detection optical system comprises:
   a condensing lens to refract the light having passed through the beam blocking unit to converge the light; and
   a detector located on a focal point of scattering light converged by the condensing lens to detect the scattering light.
30. The microparticle detection apparatus according to embodiment 29, wherein the beam blocking unit is partially located in the condensing lens.
31. The microparticle detection apparatus according to embodiment 29, wherein the condensing lens is provided at a rear thereof with a shadow zone of the beam blocking unit, and the detector is located in the shadow zone.
32. The microparticle detection apparatus according to embodiment 31, wherein a diameter of the beam blocking unit is adjusted so that the shadow zone has a predetermined size or more.
33. The microparticle detection apparatus according to embodiment 32, wherein a particle path defined by the particles introduced into the optical chamber is located ahead of a back focal plane of the condensing lens so that scattering light generated at a position of the particle path is converged into the shadow zone by the condensing lens.
34. A microparticle detection apparatus comprising:
   an optical chamber;
   an introduction unit through which particles are introduced into the optical chamber;
   a light source unit to irradiate light to the introduced particles; a detection optical system to detect light scattered by the particles to which the light has been irradiated; and
   a beam blocking unit disposed ahead of the detection optical system to block direct light which is not scattered by the particles, wherein
   the beam blocking unit comprises a mirror inclined at a predetermined angle to an advancing direction of light emitted from the light source unit to reflect the direct light incident upon the beam blocking unit.
35. The microparticle detection apparatus according to embodiment 34, wherein the detection optical system comprises:
   a condensing lens to refract the light having passed through the beam blocking unit to converge the light; and
   a detector located on a focal point of scattering light converged by the condensing lens to detect the scattering light.
36. The microparticle detection apparatus according to embodiment 35, wherein the condensing lens is provided at a rear thereof with a shadow zone of the beam blocking unit, and the detector is located in the shadow zone.
37. The microparticle detection apparatus according to embodiment 36, wherein a diameter of the beam blocking unit is adjusted so that the shadow zone has a predetermined size or more.
38. The microparticle detection apparatus according to embodiment 37, wherein a particle path defined by the particles introduced into the optical chamber is located ahead of a back focal plane of the condensing lens so that scattering light generated at a position of the particle path is converged into the shadow zone by the condensing lens.
39. A method of detecting microparticles, comprising:
   converging light emitted from an optical element;
   intersecting the converged light with a particle path;
   blocking direct light having passed through the particle path; and detecting light scattered by particles,
   wherein a focal point of light from the optical element and the converged light is located at a rear of the particle path.

## Claims

1. A microparticle detection apparatus comprising:
an optical chamber;
an introduction unit through which particles are introduced into the optical chamber;
a light source unit to irradiate light to the introduced particles;
a detection optical system to detect light scattered by the particles to which the light has been irradiated; and a beam blocking unit disposed ahead of the detection optical system to block direct light, wherein
a focal point of the light irradiated to the particles is located between a particle path defined by the particles introduced into the optical chamber and the beam blocking unit.

2. The microparticle detection apparatus according to claim 1, wherein the particle path is located in an advancing direction of light emitted from the light source unit so that the particle path intersects the light.

3. The microparticle detection apparatus according to claim 1, wherein the detection optical system comprises:
a condensing lens to refract the light having passed through the beam blocking unit to converge the light; and
a detector located on a focal point of scattering light converged by the condensing lens to detect the scattering light.

4. The microparticle detection apparatus according to claim 3, wherein the condensing lens is provided at a rear thereof with a shadow zone of the beam blocking unit, and the detector is located in the shadow zone.

5. The microparticle detection apparatus according to claim 4, wherein a diameter of the beam blocking unit is adjusted so that the shadow zone has a predetermined size or more.

6. The microparticle detection apparatus according to claim 5, wherein the particle path is located ahead of a back focal plane of the condensing lens so that scattering light generated at a position of the particle path is converged into the shadow zone by the condensing lens.

7. The microparticle detection apparatus according to claim 6, wherein the beam blocking unit comprises:
a first blocking wall disposed perpendicularly to the advancing direction of light to block some of the direct light; and
a second blocking wall protruding from the first blocking wall.

8. The microparticle detection apparatus according to claim 7, wherein the second blocking wall protrudes from an edge of the first blocking wall.

9. The microparticle detection apparatus according to claim 7, wherein the second blocking wall protrudes from the first blocking wall in parallel to the advancing direction of light.

10. The microparticle detection apparatus according to claim 7, wherein the beam blocking unit is partially located in the condensing lens.

11. The microparticle detection apparatus according to claim 1, wherein the beam blocking unit comprises a mirror inclined at a predetermined angle to the advancing direction of light to reflect the direct light.

12. The microparticle detection apparatus according to claim 2, wherein the condensing lens comprises a lens having a non-spherical surface formed at one side or opposite sides thereof.

13. The microparticle detection apparatus according to claim 2, wherein the condensing lens comprises a converging lens to converge light.

14. The microparticle detection apparatus according to claim 1, wherein the light source unit comprises:
a light emitting optical element; and
a converging optical system to converge light emitted from the optical elementwherein the optical element comprises a laser diode (LD) or a light emitting diode (LED).

15. A method of detecting microparticles, comprising:
converging light emitted from an optical element;
intersecting the converged light with a particle path;
blocking direct light having passed through the particle path; and
detecting light scattered by particles,
wherein a focal point of light from the optical element and the converged light is located at a rear of the particle path.
